# EUROPEAN PATENT SPECIFICATION

(11) **EP 3 839 169 B1**
(45) Date of publication and mention of the grant of the patent: **19.07.2023**
(21) Application number: 19869969.6
(22) Date of filing: 05.09.2019
(51) Int. Cl.: E04F 13/08, B32B 9/00, E04C 2/04, E04C 2/26, C04B 28/00, C09D 5/23, E04F 13/14, C04B 28/26, C04B 111/00, C09D 1/02

(54) **CONSTRUCTION SURFACE MATERIAL WITH MAGNETIC LAYER**
BAUOBERFLÄCHENMATERIAL MIT MAGNETISCHER SCHICHT
MATÉRIAU DE SURFACE DE CONSTRUCTION AVEC UNE COUCHE MAGNÉTIQUE

(30) Priority: 05.10.2018 JP 2018190511
(43) Date of publication of application: 23.06.2021
(73) Proprietor: Yoshino Gypsum Co., Ltd., Tokyo 100-0005 (JP)
(72) Inventor: YOKOYAMA, Itaru, Tokyo 100-0005 (JP); SATO, Yosuke, Tokyo 100-0005 (JP); FUJIKURA, Daichi, Tokyo 100-0005 (JP); TOITA, Hidetoshi, Tokyo 100-0005 (JP)
(74) Representative: Ter Meer Steinmeister & Partner
(86) International application number: PCT/JP2019/035060
(87) International publication number: WO 2020/071051

(56) References cited:
- WO-A1-2018/074218
- CA-A1- 3 036 102
- JP-A- H0 988 294
- JP-A- 2016 132 983
- JP-U- S61 128 022

## Description

### TECHNICAL FIELD

The present invention relates to a board for building with a magnetic layer.

### BACKGROUND ART

There has been a need for attaching a printed sheet, etc., to a wall, etc., by a magnetic material, such as a magnet, in a school building of a school or commercial facilities, for example. For this reason, there has been a need for a construction material that can attract a magnet, as a construction material for forming a wall, etc.

As a construction material that can attract a magnet, a construction material has been known such that a thin steel plate is placed on a surface the construction material.

For example, Patent Document 1, JPH0678983U, discloses a posting wall in which a thin steel plate is interposed between a wallpaper and a base material so that a product can be held by attraction force of a magnet. Further, document CA 3 036 102 A1 discloses a board for building with a magnetic layer according to the preamble of claim 1.

### [Related-Art Documents]

### [Patent Document]

Patent document 1: Japanese Unexamined Utility Model Publication No. 6-78983
Patent document 2: CA 3 036 102 A1

### SUMMARY OF THE INVENTION

### PROBLEM TO BE SOLVED BY THE INVENTION

However, if a steel plate is placed and fixed on a surface of a construction material, it may be difficult to perform processing, such as cutting, on the construction material.

One of major advantages of a board for building is that it can be easily cut and processed using a cutter, a round saw, etc., and that it can be cut and processed to have a desired shape at a construction site. However, a problem with the construction material with the steel plate placed on the surface thereof is that the advantage may be negated.

In addition, in the case of the posting wall disclosed in Patent Document 1, it is necessary to perform construction such as attaching a steel plate to a surface of a base material at a site. However, such construction is also a problem because a number of processes increases.

In view of the above-described problem with the related art, according to an aspect of the present invention, an object is to provide a board for building with a magnetic layer that can attract a magnet and that can be easily cut and processed to have a free shape.

### MEANS FOR SOLVING THE PROBLEM

According to an aspect of the present invention to solve the above-described problem, there is provided a board for building as defined in claim 1. The board for building comprises a magnetic layer that covers at least a part of a surface of the board for building, wherein the magnetic layer includes a magnetic material mixed to an inorganic binder, wherein the magnetic layer includes an inorganic additive, and wherein the inorganic additive is talc.

### ADVANTAGEOUS EFFECTS OF THE INVENTION

According to an aspect of the present invention, there can be provided a board for building with a magnetic layer that can attract a magnet and that can be easily cut and processed to have a free shape.

### BRIEF DESCRIPTION OF THE DRAWINGS

FIG. 1 is a perspective view of a board for building with a magnetic layer according to an embodiment of the present invention;
FIG. 2 is a diagram illustrating a magnet attraction test of a board for building with a magnetic layer according to an embodiment of the present invention;
FIG. 3 is a cross-sectional view of a wall structure according to an embodiment of the present invention;
FIG. 4 is a perspective view of a wall structure according to an embodiment of the present invention;
FIG. 5 is a diagram illustrating a method of evaluating attraction force of a magnet pair to a 1 mm steel plate used in Experimental Example 1;
FIG. 6 is a diagram illustrating a sample for an adhesion test prepared for an adhesion test in Experimental Example 2; and
FIG. 7 is a diagram illustrating an evaluation of occurrence of rust in Experimental Example 6.

### MODE FOR CARRYING OUT THE INVENTION

While embodiments of the invention are described below with reference to the accompanying drawings, the invention is not limited to the following embodiments, and various modifications and substitutions may be made to the following embodiments without departing from the scope of the invention as defined by the appended claims.

### [Board for building with magnetic layer]

An example of a configuration of a board for building with a magnetic layer according an embodiment is described.

A board for building with a magnetic layer according to the embodiment may include the board for building; and a magnetic layer that covers at least a part of a surface of the board for building. The magnetic layer includes a magnetic material mixed to an inorganic binder.

In the following, an example of a configuration of a board for building with a magnetic layer according to an embodiment is specifically described.

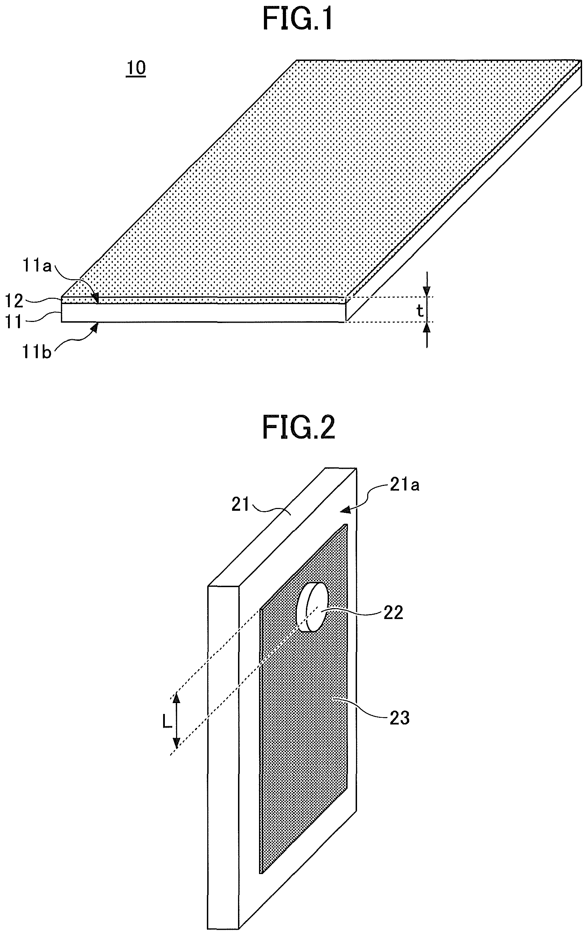

As illustrated in FIG. 1, a board for building with a magnetic layer 10 according to the embodiment may include a board for building 11 and a magnetic layer 12 that covers at least a part of a surface of the board for building 11.

Note that, although an example is illustrated in which the magnetic layer is formed on the entire surface of one main surface 11a of the board for building 11 in the board for building with the magnetic layer 10 illustrated in FIG. 1, it suffices if a magnetic layer is formed on a part that is required to be able to attract a magnetic material, such as a magnet, and the magnetic layer is not limited to the example. For example, a magnetic layer may be formed to cover a part of the one main surface 11a. In addition to the one main surface 11a, a magnetic layer may also be disposed on a part of the other main surface 11b or the whole of the other main surface 11b, or a part of the side surface or the whole of the side surface.

Furthermore, a shape of the magnetic layer need not have a continuous surface shape. The shape of the magnetic layer may be, for example, a linear shape, a dot shape, etc. The board for building with the magnetic layer according to the embodiments may also have a plurality of discrete magnetic layers.

Each component included in the board for building with the magnetic layer according to the embodiment is described below.

The board for building 11 is not particularly limited, and various types of boards for building can be used. Examples include a fiber-reinforced cement plate, a glass mat gypsum board, a board including gypsum mixed with glass fiber non-woven fabric, a cement board including glass fiber, a calcium silicate board including fiber, a gypsum board that is specified in JIS A 6901 (2014), a gypsum board that is lighter or heavier than the gypsum board specified in JIS A 6901 (2014) (in the following, the above-described gypsum board specified in JIS and the gypsum board that is lighter or heavier than the gypsum board specified in JIS are collectively referred to as "gypsum board"), a gypsum plate, a slag gypsum board, a resin board, etc. Accordingly, the board for building 11 may preferably be, for example, a fiber-reinforced cement plate, a glass mat gypsum board, a plate including gypsum including glass fiber non-woven fabric, a cement plate including glass fiber, a calcium silicate board including fiber, a gypsum board, a gypsum plate, a slag gypsum board, or a resin board.

The board for building with the magnetic layer according to the embodiment can preferably be used, especially, as a material that forms a wall of a building. Since the board for building with the magnetic layer is widely used as a wall material, the board for building with the magnetic layer may more preferably be a gypsum board. Here, a gypsum board means the above-described gypsum board specified in JIS A 6901 (2014), or a gypsum board that is lighter or heavier than the gypsum board specified in JIS A 6901 (2014). Note that the gypsum board that is lighter than the gypsum board specified in JIS A 6901 (2014) may preferably be, for example, a gypsum board having a specific gravity of greater than or equal to 0.3 and less than 0.65.

The magnetic layer 12 includes a magnetic material mixed to an inorganic binder.

The magnetic layer 12 is a layer provided so that a magnetic material, such as a magnet, can be attracted, and, by including a magnet material, the magnetic layer 12 can attract a magnetic material, such as a magnet.

A type of magnetic material included in the magnetic layer 12 is not particularly limited, and various types of magnetic materials that can attract a magnetic material, such as a magnet, by magnetic force can be used. As a magnetic material, a material is preferable that can strongly attract a magnetic material, such as a magnet, with a small amount of addition, and that exhibits ferromagnetic properties, at least, at an environmental temperature for using the board for building with the magnetic layer. As the environmental temperature for using the board for building with the magnetic layer, for example, a temperature range that is higher than or equal to -20 °C and lower than or equal to 50 °C can be considered. Note that, a material that exhibits ferromagnetic properties means a material (substance) having a magnetic moment as a whole, and means a material that has a spontaneous magnetization even in an environment with no external magnetic field. For this reason, a material that exhibits ferromagnetic properties includes a ferrimagnetic material.

As the magnetic material, iron powder is particularly preferable because the cost is particularly low and stability is excellent. A type of iron powder is not particularly limited. However, one or more types selected from, for example, iron oxide powder, reduced iron powder, or atomized iron powder may preferably be used. In particular, when iron powder is used as the magnetic material, the magnetic material may preferably include atomized iron powder.

A particle diameter of the magnetic material is not particularly limited, and a magnetic material having any particle diameter may be used. For the magnetic layer of the board for building with the magnetic layer according to the embodiment, a magnetic material having a particle diameter that is generally used may preferably be used, and, for example, a magnetic material having an average particle diameter of greater than or equal to 20 um and less than or equal to 200 um may preferably be used.

Note that, in this specification, the average particle diameter means a particle diameter at a cumulative value of 50% in a particle diameter distribution determined by a laser diffraction/scattering method, and the average particle diameter is an average particle diameter based on a volume, that is, the volume average particle diameter.

A ratio, etc., of a magnetic material included in the magnetic layer is not particularly limited. For example, the ratio, etc., may be arbitrarily selected according to magnetic properties of the magnetic material, or capability, etc., of attracting a magnetic material required for the board for building with the magnetic layer. For example, in the magnetic layer, content per unit area of the magnetic material may preferably be greater than or equal to 0.3 kg/m². The reason is that, by setting the content per unit area of the magnetic material in the magnetic layer to be greater than or equal to 0.3 kg/m², a magnetic material, such as a magnet, can be attracted on a surface of the board for building with the magnetic layer by sufficient attraction force. In particular, from a perspective of enhancing the attraction force of a magnetic material, such as a magnet, content per unit area of the magnetic material in the magnetic layer may more preferably be greater than or equal to 0.8 kg/m², and furthermore preferably greater than or equal to 1.0 kg/m².

An upper limit value of the content per unit area of the magnetic material in the magnetic layer is not particularly limited, and can be arbitrarily selected depending on, for example, the magnetic properties of the magnetic material, the attraction force required for the board for building with the magnetic layer, the cost, etc. The content of the magnetic layer per unit area of the magnetic material may preferably be less than or equal to 10 kg/m².

Note that the unit area in the content per unit area of the magnetic material in the magnetic layer means a unit area on a plane opposite to a plane of the magnetic layer 12 facing the board for building 11.

In addition, density of the magnetic layer may preferably be greater than or equal to 2.0 g/cm³, and more preferably greater than or equal to 2.5 g/cm³. The reason is that, by setting the density of the magnetic layer to be greater than or equal to 2.0 g/cm³, the attraction force of the magnet can be particularly increased, and the magnetic layer can more reliably attract a magnetic material, such as a magnet.

The upper limit of the density of the magnetic layer is not particularly limited. For example, the upper limit of the density of the magnetic layer may be arbitrarily selected in accordance with the attraction force and cost, etc., required for the board for building with the magnetic layer. The density of the magnetic layer may preferably be, for example, less than or equal to 5.0 g/cm³.

The inorganic binder included in the magnetic layer is not particularly limited, and various types of inorganic binders may be used. By using an inorganic binder, noncombustibility can be enhanced compared to a case in which an organic binder is used. Accordingly, by providing only one layer of a magnetic layer, the board for building with the magnetic layer according to the embodiment can meet a requirement on noncombustibility. In addition, by using an inorganic binder, oxidation of the magnetic material can be suppressed, and stability of the magnetic material can be enhanced.

As an inorganic binder, for example, one or more types selected from an inorganic silicate system, a phosphate system, a silica sol system, etc., may preferably be used.

Note that, as described above, by using an inorganic binder in the magnetic layer, the noncombustibility of the board for building with the magnetic layer can be enhanced compared to a case in which an organic binder is used. Accordingly, it is preferable not to use an organic binder as the binder of the magnetic layer, and it is preferable not to include an organic binder in the magnetic layer. Among the inorganic binders, the inorganic silicate-based binder also functions as a noncombustible material, so that an inorganic silicate-based binder may preferably be used, particularly in applications in which enhancement of noncombustibility is required. For example, an alkali metal silicate binder may be preferably used as the inorganic silicate-based binder.

The content of the inorganic binder included in the magnetic layer is not particularly limited, and the content of the magnetic layer can be arbitrarily selected depending on the strength, etc., required for the magnetic layer. For example, the magnetic layer may preferably include an inorganic binder so that the inorganic binder is greater than or equal to 1 part by mass and less than or equal to 35 parts by mass with respect to 100 parts by mass of the magnetic material. The magnetic layer may more preferably include an inorganic binder so that the inorganic binder is greater than or equal to 1 part by mass and less than or equal to 15 parts by mass with respect to 100 parts by mass of the magnetic material.

The reason is that, by setting the content of the inorganic binder to be greater than or equal to 1 part by mass with respect to 100 parts by mass of the magnetic material, the magnetic layer can be formed to have a uniform film shape, and the adhesion to the board for building with the magnetic layer, as a base, can be enhanced. Furthermore, by setting the content of the inorganic binder to be less than or equal to 35 parts by mass with respect to 100 parts by mass of the magnetic material, cracks can be prevented from occurring in the magnetic layer. Here, the cause of occurrence of cracks in the magnetic layer is not clear. However, it is assumed that, when a content ratio of an inorganic binder is too large, a total shrinkage amount of the magnetic layer becomes large during hardening of a coating material including a magnetic material, which is the raw material of the magnetic layer.

The magnetic layer may include any component other than the magnetic material and the inorganic binder.

According to the invention, the magnetic layer includes talc as inorganic additive.

The inorganic additive may further comprise one or more types selected from gypsum, calcium carbonate, magnesium oxide, magnesium hydroxide, aluminum oxide, barium sulfate, kaolin, etc.

By adding an inorganic additive, the fluidity of the coating material including the magnetic material used for forming the magnetic layer can be enhanced, and the surface of the magnetic layer can be particularly smoothed. Furthermore, for the inorganic additives exemplified above, since all of the materials are white, by including the inorganic additives in the magnetic layer, or by including the inorganic additives and pigments described below, the surface of the magnetic layer of the board for building with the magnetic layer may be made closer to white.

The particle diameter of the inorganic additive to be used is not particularly limited. However, for example, the average particle diameter may preferably be greater than or equal to 0.1 um and less than or equal to 50 µm, and more preferably greater than or equal to 1 um and less than or equal to 30 µm.

When an inorganic additive is added, the amount of the inorganic additive included in the magnetic layer can be selected depending on the type of the inorganic additive to be used, the particle diameter, etc., and is not particularly limited. When the magnetic layer includes an inorganic additive, for example, the magnetic layer may preferably include the inorganic additive at a ratio such that, with respect to 100 parts by mass of the magnetic material, the inorganic additive is greater than or equal to 0.5 parts by mass and less than or equal to 30 parts by mass; more preferably greater than or equal to 1 part by mass and less than or equal to 20 parts by mass; and furthermore preferably greater than or equal to 5 parts by mass and less than or equal to 10 parts by mass. Note that, if the content of the inorganic additive is less than 0.5 parts by mass or greater than 30 parts by mass relative to 100 parts by mass of the magnetic material, the fluidity of the coating material including the magnetic material may be lowered during formation of the magnetic layer. As the fluidity of the coating material including the magnetic material is lowered, pinholes, which are traces of air bubbles, may be formed in the magnetic layer. Even if pinholes are generated in the magnetic layer, there is no change in the attraction force of the magnet of the magnetic layer. However, if the surface is finished with a paint, the aesthetic appearance of the magnetic layer may be damaged. In contrast, as described above, the content of the inorganic additive may preferably be set to be greater than or equal to 0.5 parts by mass and less than or equal to 30 parts by mass relative to 100 parts by mass of the magnetic material, so that generation of pinholes in the magnetic layer can be particularly suppressed.

The magnetic layer may also contain a rust-preventive agent. By including a rust-preventive agent in the magnetic layer, discoloration of the magnetic material included in the magnetic layer caused by oxidization can be particularly suppressed and occurrence of a change in the attraction force of the magnetic material, such as a magnet, can be particularly suppressed.

When the magnetic layer includes a rust-preventive agent, the content is not particularly limited. However, since the magnetic layer may react with an inorganic binder to cause gelation depending on the ingredients of the rust-preventive agent or the amount of the rust-preventive agent added, the rust-preventive agent may preferably be added to the extent that the rust-preventive agent does not affect other ingredients.

When the magnetic layer includes a rust-preventive agent, the magnetic layer may include the rust-preventive agent preferably at a ratio of greater than or equal to 0.1% by mass, more preferably at a ratio of greater than or equal to 0.3% by mass.

When the magnetic layer includes a rust-preventive agent, an upper limit of the content is not particularly limited. However, even if the rust-preventive agent is added excessively, there is no significant change in the rust preventive effect, and the strength of the magnetic layer may be lowered. Accordingly, the magnetic layer may preferably include the rust-preventive agent at a ratio of less than or equal to 20% by mass relative to the magnetic material.

The type of the rust-preventive agent is not particularly limited. However, the rust-preventive agent may preferably include one or more types selected from, for example, a water soluble or emulsion organic acid-based rust-preventive agent, a chelate-based rust-preventive agent, an organic acid amine-based rust-preventive agent, a fatty acid-based rust-preventive agent, and a nitrite-based rust-preventive agent.

However, as described above, by using an inorganic binder, the board for building with the magnetic layer according to the embodiment can suppress oxidation of the magnetic material and enhance the stability of the magnetic material. For this reason, the magnetic layer of the board for building with the magnetic layer according to the embodiment need not include the rust preventing agent.

The magnetic layer may also include any other additive, for example, a thickening agent, a defoaming agent, a titanium oxide for adjusting the color of the magnetic layer, one or more pigments selected from white lead, zinc oxide, lithopone, etc., a filler material (bulking material), or the like.

A Hunter whiteness degree (Wb) measured by a color difference meter on the surface of the magnetic layer may preferably exceed 25 because, for example, when a wallpaper finish is performed by placing a wallpaper on the surface of the board for building with the magnetic layer or a paint finish is performed by applying paint, the color of the magnetic layer may be prevented from penetrating through the surface of the finished material and may become difficult to be seen. Accordingly, the color tone of the magnetic layer may preferably be adjusted by adding, for example, the above-described inorganic additive or, in some cases, the above-described pigment so that the Hunter whiteness degree (Wb) of the surface of the magnetic layer becomes greater than 25. Particularly, when an iron powder is used as the magnetic material and the magnetic layer does not include an inorganic additive or pigment, the Hunter whiteness degree (Wb) of the surface of the magnetic layer becomes approximately 3. Accordingly, as described above, the color tone may preferably be adjusted by adding an inorganic additive or pigment to the magnetic layer. According to a study by the inventors of the present invention, for example, when 0.5 parts by mass of talc, as an inorganic additive, and 2 parts by mass of titanium oxide, as a pigment, are added to 100 parts by mass of iron powder included in a magnetic layer, the Hunter whiteness degree (Wb) becomes approximately 30. For this reason, when the magnetic layer includes iron powder, the magnetic layer may preferably include, with respect to 100 parts by mass of iron powder, greater than or equal to 0.5 parts by mass of an inorganic additive, such as talc, and greater than or equal to 2 parts by mass of pigment, such as titanium oxide.

As described above, the board for building with the magnetic layer according to the present embodiment may include any additive. However, from a perspective of enhancing the noncombustibility of the board for building with the magnetic layer according to the present embodiment, it is preferable that the content of the organic compound of the magnetic layer be suppressed. However, according to the study by the inventors of the present invention, if the ratio of organic compounds relative to 100 parts by mass of the magnetic material in the magnetic layer is up to approximately 5 parts by mass, there is almost no change in the calorific value of the board for building with the magnetic layer, and the noncombustibility is not affected. Accordingly, the content ratio of the organic compounds in the magnetic layer may preferably be, with respect to 100 parts by mass of the magnetic material, less than or equal to 5 parts by mass, more preferably less than or equal to 2 parts by mass, and furthermore preferably less than or equal to 1 part by mass.

The organic compounds included in the magnetic layer are derived from any additive added to the magnetic layer. Accordingly, by adjusting the content ratio of the organic compounds in the additive to be added to the coating material including the magnetic material used to form the magnetic layer, the content ratio of the organic compounds included in the magnetic layer can be adjusted to be within a desired range.

The thickness of the magnetic layer 12 is not particularly limited. However, the thickness of the magnetic layer 12 may preferably be greater than or equal to 0.1 mm, and more preferably greater than or equal to 0.3 mm.

An upper limit of the thickness of the magnetic layer 12 is not particularly limited. However, the upper limit of the thickness of the magnetic layer 12 may preferably be, for example, less than or equal to 5.0 mm, and more preferably less than or equal to 2.0 mm.

In the board for building with the magnetic layer according to the embodiment, a face of the magnetic layer opposite to the face of the magnetic layer facing the board for building may preferably be exposed. That is, the face of the magnetic layer opposite to the face of the magnetic layer facing the board for building preferably does not include other layers including a layer for enhancing noncombustibility. The reason is that noncombustibility of the board for building with the magnetic layer is sufficiently enhanced by the magnetic layer including an inorganic binder. Accordingly, there is no need to provide additional layers to further enhance the noncombustibility.

When a wall or the like is formed using the board for building with the magnetic layer according to the embodiment, a finishing material, such as wallpaper, to be disposed on the surface of the magnetic layer, is not included in the above-described other layers. Accordingly, except for these finishing materials, in the board for building with the magnetic layer, the face of the magnetic layer opposite to the face of the magnetic layer facing the board for building may preferably be exposed.

So far, the components included in the board for building with the magnetic layer according to the embodiment are described. In the following, properties, etc., of the board for building with the magnetic layer are described.

A surface of the board for building with the magnetic layer according to the embodiment may preferably be smooth.

Here, the smoothness of the surface (main surface) of the board for building with the magnetic layer according to the embodiment means that the thickness variation is less than or equal to 500 um when the thickness of the board for building with the magnetic layer is measured at multiple points.

The thickness of the board for building with the magnetic layer can be measured in the same manner as specified in "a) Thickness" in "7.3.1 Size" in JIS A 6901 (2014). Specifically, the thickness can be measured at six measurement positions at equal intervals in an area that is within 25 mm from an end face of the board for building with the magnetic layer, which is the sample, and that is located inward from both side faces of the board for building with the magnetic layer by a distance that is greater than or equal to 80 mm. Accordingly, it can be said that the surface is smooth when the thickness variation at the six measured points is less than or equal to 500 µm.

The surface of the board for building with the magnetic layer may preferably be smooth because, for example, when the board for building with the magnetic layer is used as a wall material, etc., a flat wall can be formed. In addition, when the surface of the board for building with the magnetic layer is smooth, the following processes can be easily performed on the surface of the board for building with the magnetic layer: wallpaper pasting by pasting wallpaper (wallpaper finish); paint finish by applying paint; cosmetic finish by laminating; and decorative magnet finish by placing decorative magnets. Note that the decorative magnet finish refers to finishing a surface of a wall by attracting wallpaper, a decorative board, and decorative paper, in which a magnet is disposed on one of the main surfaces, to the board for building with the magnetic layer.

In addition, in the board for building with the magnetic layer according to the embodiment, the thickness t may preferably meet the standard of JIS A 6901 (2014).

Meeting the standard JIS A 6901 (2014) implies that the thickness of the board for building with the magnetic layer belongs to any one of the following ranges: greater than or equal to 9.5 mm and less than or equal to 10.0 mm; greater than or equal to 12.5 mm and less than or equal to 13.0 mm; greater than or equal to 15.0 mm and less than or equal to 15.5 mm; greater than or equal to 16.0 mm and less than or equal to 16.5 mm; greater than or equal to 18.0 mm and less than or equal to 18.5 mm; greater than or equal to 21.0 mm and less than or equal to 21.5 mm; and greater than or equal to 25.0 mm and less than or equal to 25.5 mm.

This means that, if the thickness t of the board for building with the magnetic layer meets the standard of JIS A 6901 (2014), the thickness of the board for building with the magnetic layer meets the same standard as the standard of the thickness of the board for building that is normally used. It is preferable to meet the standard because, for example, even if a wall, etc., is formed by simultaneously using the board for building with the magnetic layer according to the embodiment and a normal board for building, a flat wall without unevenness caused by the types of the boards for building used, namely, a flat wall can be easily formed without adjusting the thickness, etc.

Similar to the board for building that is more commonly used, the thickness t of the board for building with the magnetic layer may preferably belong to one range of the following ranges: greater than or equal to 9.5 mm and less than or equal to 10.0 mm; greater than or equal to 12.5 mm and less than or equal to 13.0 mm; greater than or equal to 15.0 mm and less than or equal to 15.5 mm; and greater than or equal to 21.0 mm and less than or equal to 21.5 mm.

Note that, here, the thickness t of the board for building with the magnetic layer means the overall thickness of the board for building with the magnetic layer, as shown in Fig. 1. For example, when the board for building with the magnetic layer is formed of the board for building 11 and the magnetic layer 12, such as the board for building 10 with the magnetic layer shown in FIG. 1, the total of the thickness of the board for building 11 and the thickness of the magnetic layer 12 is the thickness t of the board for building 10 with the magnetic layer.

The thickness of the board for building with the magnetic layer can be evaluated by the method specified in JIS A 6901 (2014).

The board for building with the magnetic layer according to the embodiment may preferably meet quasi-noncombustibility performance. That is, the board for building with the magnetic layer according to the embodiment may preferably be qualified as a quasi-non-noncombustible material. Note that quasi-noncombustibility is stipulated in Article 5, Item 5 of the Building Standards Act Enforcement Order. In order to be qualified as a quasi-noncombustible material, the material is required to meet the following requirements: when fire heat from a normal fire is applied, the material does not burn for 10 minutes after the start of heating; the material does not cause deformation, melting, cracks, and any other damage, which are harmful on fire prevention; and the material does not generate smoke or gas, which is harmful for evacuation.

In addition, the board for building with the magnetic layer according to the embodiment may preferably meet the noncombustibility performance. In other words, the board for building with the magnetic layer may preferably be qualified as a noncombustible material. Note that noncombustibility is stipulated in Article 2, Item 9 of the Building Standards Act and the Building Standard Act Enforcement Order Article 108-2. In order to be qualified as a noncombustible material, the material is required to meet the following requirements: when fire heat from a normal fire is applied, the material does not burn for 20 minutes after the start of heating; the material does not cause deformation, melting, cracks, and any other damage, which are harmful on fire prevention; and the material does not generate smoke or gas, which is harmful for evacuation. By the restriction on interior finish of the Building Standards Act, building materials that can be used depending on the use and scale of the building are determined to be a quasi-noncombustible material or a noncombustible material. The board for building with the magnetic layer according to the embodiment can be adapted to the restriction on interior finish required for the building to be used. Namely, the board for building with the magnetic layer according to the embodiment can be a quasi-noncombustible material or a noncombustible material, so that the board for building with the magnetic layer can be used in buildings of any application and scale.

As described above, the noncombustibility of the board for building with the magnetic layer according to the embodiment is enhanced by using an inorganic binder in the magnetic layer. In some cases, in order to further enhance the noncombustibility, a material that does not easily burn can be used as a material of the board for building and a material of the magnetic layer. Specifically, for example, for a board for building in which a magnetic layer is disposed, a board for building that meets the quasi-noncombustibility performance may be used or a board for building that meets the noncombustibility performance may be used. By selecting these materials in accordance with necessity, the board for building with the magnetic layer may meet the quasi-noncombustibility performance or the noncombustibility performance.

As described above, the board for building with the magnetic layer according to the present embodiment can attract magnetic materials, such as magnets, by arranging the magnetic layer. The attraction force of the magnet is not particularly limited. However, for example, the attraction force may preferably satisfy the following properties of a magnet attraction test.

First, as shown in Fig. 2, the board for building with the magnetic layer 21 according to the embodiment is arranged so that a main surface 21a is vertical. When one magnet 22 that includes a magnet part with a diameter of 17 mm and that is provided with attraction force of 3.5 N with respect to a 1 mm iron plate is used and one sheet of A4 paper sheet 23 is attached to the main surface 21a by the one magnet 22, the one magnet may preferably have attraction force that prevents the A4 paper sheet from dropping. Here, the arrangement in which the main surface 21a is vertical implies that the main surface of the board for building with the magnetic layer 21 having the plate-like shape, i.e., the surface on which the magnet is attracted is arranged to be vertical with respect to the horizontal direction, such as the ground surface. In the following, the same description has the same meaning.

In addition, the board for building with the magnetic layer may more preferably be provided with similar properties when wallpaper is disposed on the main surface of the board for building with the magnetic layer. Namely, the board for building with the magnetic layer 21 in which the wallpaper is disposed on the main surface 21a is arranged so that the main surface 21a is vertical. When one magnet 22 that includes a magnet part with a diameter of 17 mm and that is provided with attraction force of 3.5 N with respect to a 1 mm iron plate is used and one sheet of A4 paper sheet 23 is attached to the main surface 21a by the one magnet 22, the one magnet may preferably have attraction force that prevents the A4 paper sheet from dropping.

Note that, when a wallpaper is disposed on the main surface of the board for building with the magnetic layer and a magnet attraction test is performed, for example, a wallpaper having a thickness of 0.3 mm, which is commonly used, may be used as the wallpaper. For example, a vinyl cloth may be used as the wallpaper.

In any of the above-described magnet attraction tests, an A4 sheet provided with a thickness of 0.09 mm and a mass of 64 g/m² may be preferably used, as the A4 sheet. In addition to the magnet attraction test, the A4 sheet provided with the above-described thickness and mass may be preferably used as the A4 sheet.

When performing the magnetic attraction test of any of the above-described magnet attraction tests, a position at which the magnetic layer is arranged is not particularly limited. However, the board for building with the magnetic layer according to the present embodiment exhibits sufficient attraction force to attract the magnet by providing the magnetic layer to, at least, a part of the surface of the board for building. Accordingly, a magnetic layer may preferably be provided at least in the portion at which the magnet 22 is to be arranged.

The position of the magnet 22 and the position of the A4 sheet 23 are not particularly limited. However, a distance L between the center of the magnet 22 and an upper end of the A4 sheet 23 may preferably be 3 cm, and the center of the magnet 22 may more preferably be disposed at the center of the width direction of the A4 sheet 23.

The board for building with the magnetic layer according to the embodiment is described above. The board for building with the magnetic layer according to the embodiment can attract a magnetic material, such as a magnet, by arranging a magnetic layer, at least, at a part of the surface of the board for building. Furthermore, since the magnetic layer is only disposed, at least, at a part of the surface of the board for building, the board for building can be easily cut and processed into a desirable shape.

A board for building in which a steel plate is arranged and fixed on a surface, which has been used, has a problem that fastening the board for building is difficult because, due to the steel plate, driving a screw or a nail is difficult. An additional problem is that, when finishing with wallpaper or painting is made, adhesion to the wallpaper or paint is lowered.

In contrast, according to the board for building with the magnetic layer according to the embodiment, since the magnetic layer is only disposed, at least, at a part of the surface of the construction surface material, nails, screws, etc., can be easily driven. In addition, since, in the board for building with the magnetic layer according to the embodiment, the magnetic layer is only disposed, at least, at a part of the surface of the board for building, as described above, cracks can be prevented from occurring even if nails, screws, etc., are driven. In addition, the adhesion to the wallpaper or the paint can be sufficiently enhanced.

### [Method of manufacturing the board for building with the magnetic layer]

Next, a configuration example of a method of manufacturing the board for building with the magnetic layer according to the embodiment is described. By the method of manufacturing the board for building with the magnetic layer according to the embodiment, the above-described board for building with the magnetic layer can be manufactured. Accordingly, a description of a matter that is already described may be omitted.

The method of manufacturing the board for building with the magnetic layer according to the embodiment may include a magnetic layer forming step of forming a magnetic layer by applying a coating material including a magnetic material, which includes the magnetic material mixed to an inorganic binder and talc, to, at least, a part of the surface of the board for building.

The coating material including the magnetic material can be prepared by mixing the above-described material of the magnetic layer, specifically the magnetic material, the inorganic binder, with any additive, such as an inorganic additive or an anti-rust agent, if necessary. When the coating material including the magnetic material is prepared, a dispersion medium, such as water, for adjusting viscosity may be added and mixed, if necessary.

The content per unit area of the magnetic material of the magnetic layer and the density of the magnetic layer can be adjusted according to the particle size of the magnetic material in the coating material including the magnetic material, and the content (content ratio) of various components, such as the magnetic material, kneaded water, and inorganic additives. When a filler material (bulking material) is added to the coating material including the magnetic material, they can be adjusted by the amount (content) of the filler material. For example, an aggregate, etc., may be used as the filler material.

The raw material used in the magnetic layer forming step and the suitable amount to be added, the content per unit area of the magnetic material of the magnetic layer, and the suitable range, etc., of the density are described above, and, thus, the description is omitted.

In the magnetic layer forming step, a means and a method of applying the coating material including the magnetic material to at least a part of the surface of the board for building are not particularly limited. However, coating may preferably be applied, so that a magnetic layer formed has a uniform thickness. Accordingly, in the magnetic layer forming process, the coating material including the magnetic material may preferably be applied to, at least, a part of the surface of the board for building by any of a roll coater, a flow coater, and a scraping method.

Here, the roll coater is a means for applying the coating material including the magnetic material to a rotating roller and forming a magnetic layer on the surface of the board for building with the roller. The flow coater is a means for flowing the coating material including the magnetic material into a thin film on a surface of the board for building from above the board for building to be conveyed and forming a magnetic layer on the surface of the board for building. In addition, the scraping method is a means (method) of forming a magnetic layer, for example, by scraping the coating material including the magnetic material fed onto a surface of the building plate by a blade, etc., and by spreading the coating material to a desired thickness on the surface of the board for building.

Note that, a magnetic layer with a desired pattern may be formed on the board for building supplied to the magnetic layer forming step by masking, in advance, a part on which no magnetic layer is to be formed.

The method of manufacturing the board for building with the magnetic layer according to the embodiment may include any step in addition to the above-described magnetic layer forming step.

The method of manufacturing the board for building with the magnetic layer according to the embodiment may further include, if necessary, a drying step of drying the formed magnetic layer, a cutting step of cutting the board for building with the magnetic layer or the board for building as a raw material to a desired size, etc.

A drying temperature in the drying process is not particularly limited. However, for example, the drying temperature may preferably be less than or equal to 100 °C, more preferably less than or equal to 70 °C. The reason is that, by setting the drying temperature to be less than or equal to 100 °C, an occurrence of a failure, such as an occurrence of a bend in board for building with a magnetic layer or an occurrence of a crack in a magnetic layer, can be suppressed.

Note that a lower limit value of the drying temperature is not particularly limited. However, from a perspective of productivity, the lower limit value may preferably be set to be greater than or equal to 20 °C, more preferably greater than or equal to 30 °C.

### [Wall Structure]

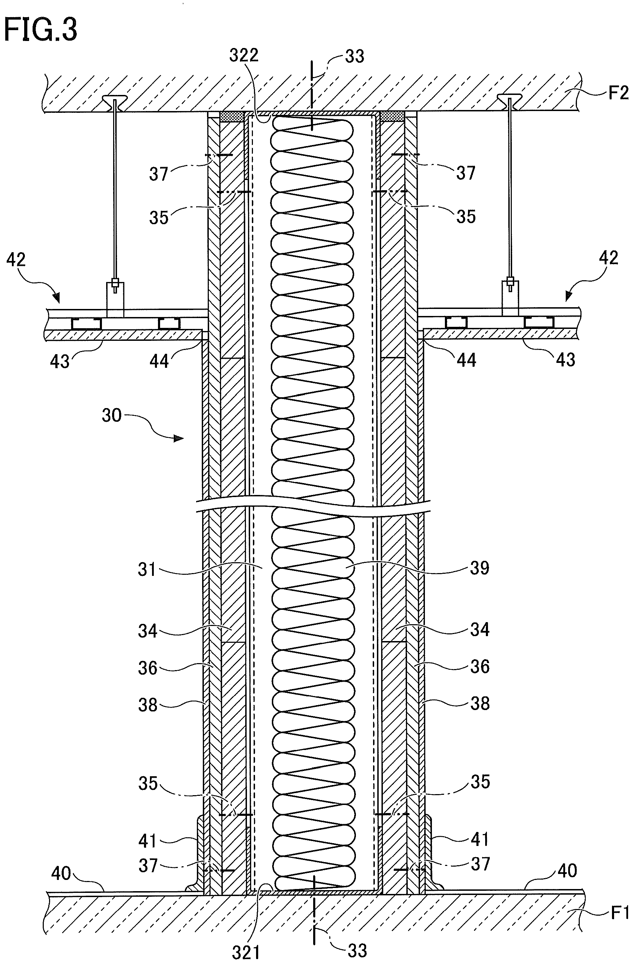

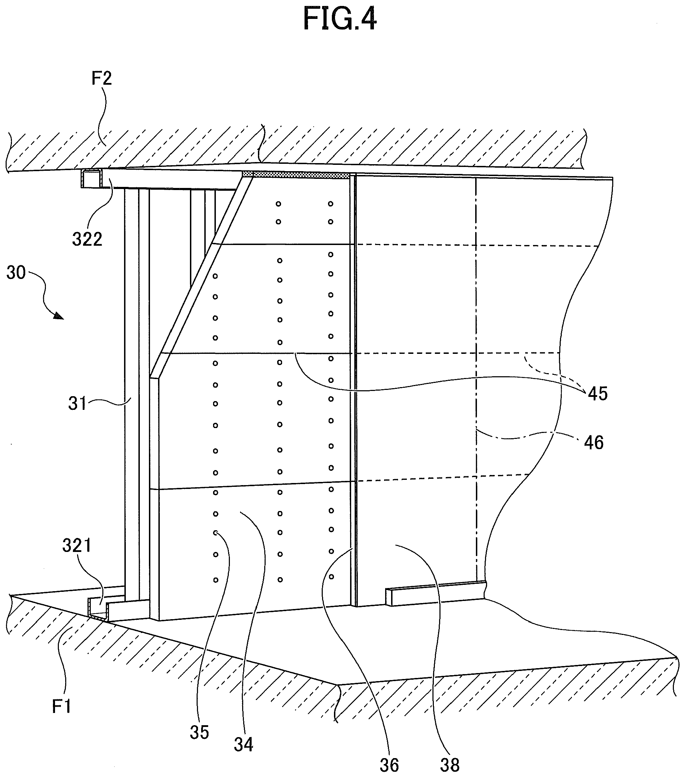

Next, a configuration example of a wall structure using the above-described board for building with the magnetic layer is described with reference to Fig. 3 and Fig. 4. Fig. 3 shows a cross-sectional view of a partition wall, that is the wall structure, in a plane parallel to the height direction and perpendicular to a main surface of the wall, and Fig. 4 shows a perspective view of the partition wall. In Fig. 4, the depiction of a ceiling light iron base in FIG. 3 is omitted so that the structure of the partition wall can be easily seen.

The wall structure according to the embodiment may include the above-described board for building with the magnetic layer. The following is a specific configuration example.

The partition wall 30 shown in Fig. 3 is constructed on a floor slab F1 of reinforced concrete. The lower end of the partition wall 30 is secured to the floor slab F1, and the upper end of partition wall 30 is secured to a floor slab F2 of the reinforced concrete on the upper floor. The shafts of the partition wall 30 are formed of a steel stud 31, a floor runner 321, and an upper runner (ceiling runner) 322. The stud 31 is formed of a channel-shaped member formed of light weight steel, and the floor runner 321 and the upper runner 322 are formed of light weight groove-shaped steel. The dotted line in FIG. 3 shows an inner wall of the stud 31. The floor runner 321 and the upper runner 322 are secured to the floor slabs F1 and F2, respectively, by fasteners 33, such as anchor bolts, and a lower end and an upper end of the stud 31 are secured by the floor runner 321 and the upper runner 322, respectively. The studs 31 are arranged in a wall core direction at predetermined intervals (e.g., 455 mm intervals), each of which is adjusted to be a size of approximately from 300 mm to 600 mm, and the studs 31 are vertically arranged between the floor slabs F1 and F2.

A bottom board 34 is attached to both sides of the stud 31 by screws 35, and an upper board 36 is secured to the surface of the bottom board 34 by one or more types selected from fasteners 37, such as staples, and an adhesive. As the bottom board 34, a noncombustible building material board may preferably be used, such as a gypsum board specified by JIS A 6901 (2014), a gypsum board that is lighter or heavier than the above-described gypsum board, a gypsum plate, a hard gypsum plate, a glass fiber-reinforced gypsum board, a calcium silicate board, etc. Note that, in Fig. 3, a part of the depiction of the screws 35 is omitted, for the convenience of the depiction.

On the surface of the upper board 36, a surface finish material 38 is applied, such as a paint or a cloth.

A heat insulating material 39, such as glass wool or rock wool, may be disposed inside the partition wall 30. Then, a floor finishing material 40 may be constructed on the floor slab F1, and a baseboard 41 may be attached to the lower edge of the partition wall 30. As the baseboard 41, a general purpose ready-made baseboard may be used, such as a vinyl baseboard.

Additionally, a ceiling light iron base 42 can be suspended from the floor slab F2 on the upper floor. Then, a ceiling finishing material 43 can be disposed on a surface of the ceiling light iron base 42.

The ceiling finishing material 43 connects to an interior wall surface via a cut-off edge 44, such as a ceiling edge. As the cut-off edge 44, a ready-made cut-off edge formed of a resin or a metal, a joiner, or a processed wood may be used.

As shown in FIG. 4, the bottom boards 34 are attached in the horizontal direction, and the upper and lower bottom boards 34 are abutted against each other at a horizontal joint 45. A plurality of horizontal joints 45 extends horizontally and in parallel, as joints of a configuration of the abutting joints.

The upper boards 36 are attached in a vertical direction and are interconnected via vertical joints 46 in a desired joint form, such as a gap-type joint, an abutting joint, a joint based on a joint method, etc. A plurality of vertical joints 46 extends vertically and in parallel.

As the upper board 36, the above-described board for building with the magnetic layer may be preferably used. In addition, the vertical joint 46 between the upper boards 36 may be joined with a joining material. Note that a portion of the upper boards 36 that form the partition wall 30 may be the board for building with the magnetic layer, and the rest may be a normal board for building without a magnetic layer.

As described above, as the upper board 36, the above-described board for building with the magnetic layer may preferably be used, so that the partition wall that is the wall structure can be a wall that can attract a magnetic material, such as a magnet.

Here, the example of the structure of the partition wall is described, as a wall structure. However, the wall structure according to the embodiment is not limited to the partition wall, and the wall structure according to the embodiment includes various wall structures using the above-described board for building with the magnetic layer. Furthermore, although an example is described here in which the board for building with the magnetic layer is secured to the bottom board, the wall structure according to the embodiment is not limited to this. The wall structure according to the embodiment includes a wall structure in which the board for building with the magnetic layer is secured to a stud with a screw, etc.

### [Example]

In the following, specific examples are described. However, the present invention is not limited to these examples.

### [Experimental example 1]

In the experimental example 1, a board for building with a magnetic layer shown in FIG. 1 was manufactured, and a magnet attraction test was performed.

First, a manufacturing condition of the board for building with the magnetic layer is described.

As a board for building 11, a gypsum board having a thickness of 12.0 mm × a width of 300 mm × a length of 400 mm was prepared, and a magnetic layer 12 was formed on an entire surface of one of main surfaces 11a to obtain the board for building with the magnetic layer 10.

The magnetic layer was formed by applying a coating material including a magnetic material, which was formed by mixing, with respect to 100 parts by mass of iron powder, which is the magnetic material, 5 parts by mass of an alkali metal silicate-based binder, which is an inorganic binder, with water, to the main surface of the board for building 11 by a scraping method so that the thickness was 0.75 mm, and by drying the coating material including the magnetic material.

As shown in Table 1, as the iron powder, reduced iron powder was used in experimental example 1-1 to experimental example 1-5, atomized iron powder was used in experimental examples 1-6 to experimental example 1-10, and iron oxide powder was used in experimental examples 1-11 to experimental example 1-15. Note that, as the iron oxide powder, triiron tetroxide powder was used. The average particle diameter of each iron powder was 50 um.

The alkali metal silicate-based binder included lithium silicate, sodium silicate, and zinc borate.

In each of experimental example 1-1 to experimental example 1-15, the magnetic layer 12 was formed, so that the content of iron powder, which is a magnetic material, per unit area was the corresponding value shown in Table 1. Specifically, for example, in experimental example 1-1, experimental example 1-6, and experimental example 1-11, the magnetic layer was formed so that the content of iron powder, which is a magnetic material of the magnetic layer, was 0.3 kg/m² per unit area. Note that, when the magnetic layer 12 of each experimental example was formed, by adjusting the amount of water added to the coating material including the magnetic material, the amount of iron powder included in the magnetic layer 12 per unit area was adjusted to be a desired value for each experimental example.

In each of the experimental examples, the thickness of the magnetic layer was found to be within the range of 0.75 mm ± 0.25 mm.

As shown in Fig. 2, in the magnet attraction test, first, the board for building with the magnetic layer 12 manufactured for each experimental example was arranged, so that the main surface 21a was vertical. One magnet 22, in which a diameter of the magnet part was 17 mm, and which was provided with the attraction force of 3.5 N to the 1 mm iron plate, was used, and a A4 paper sheet 23 was attached to the main surface 21a by the one magnet. Then, the number of the A4 paper sheets 23 was increased until the A4 paper sheets 23 fell, and the number of the sheets - 1 at the time at which the A4 paper sheets fell was evaluated as the magnet attraction force of the board for building with the magnetic layer.

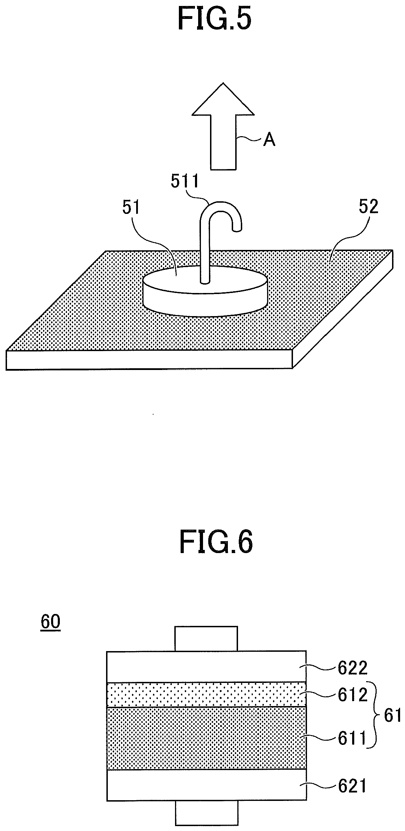

Note that, as shown in Fig. 5, the magnet used in the magnet attraction test was attracted to an iron plate 52 having the thickness of 1 mm, and a hook 511 connected to the magnet 51 was pulled along the block arrow A at the speed of 3 mm/sec by an autograph, which is not depicted, to measure the maximum strength. The maximum strength was defined as the attraction force to the 1 mm iron plate, and the same magnet was used in the experimental examples.

Furthermore, when the magnet attraction test shown in Fig. 2 was performed, the magnet was disposed so that the distance L between the center of the magnet 22 and the upper end of the A4 paper sheet 23 was 3 cm, and the center of the magnet 22 was positioned at the center of the A4 paper sheet 23 in the width direction.

As the A4 paper sheet 23, an A4 paper sheet having a thickness of 0.09 mm and a mass of 64 g/m² was used.

Evaluation results are given in Table 1.

In Table 1, the numerical value below the corresponding experimental example number shows the result of the magnet attraction test.

Each of the experimental example 1-1 to experimental example 1-15 is according to the embodiment.

**[Table 1]**

| TYPE OF MAGNETIC MATERIAL USED FOR MAGNETIC LAYER | CONTENT PER UNIT VOLUME OF MAGNETIC MATERIAL OF MAGNETIC LAYER (kg/m²) | | | | |
|---|---|---|---|---|---|
| | 0.3 | 0.8 | 1.0 | 2.0 | 4.0 |
| REDUCED IRON POWDER | EXPERIMENTAL EXAMPLE 1-1 | EXPERIMENTAL EXAMPLE 1-2 | EXPERIMENTAL EXAMPLE 1-3 | EXPERIMENTAL EXAMPLE 1-4 | EXPERIMENTAL EXAMPLE 1-5 |
| | 2 SHEETS | 4 SHEETS | 4 SHEETS | 5 SHEETS | 9 SHEETS |
| ATOMIZED IRON POWDER | EXPERIMENTAL EXAMPLE 1-6 | EXPERIMENTAL EXAMPLE 1-7 | EXPERIMENTAL EXAMPLE 1-8 | EXPERIMENTAL EXAMPLE 1-9 | EXPERIMENTAL EXAMPLE 1-10 |
| | 3 SHEETS | 4 SHEETS | 4 SHEETS | 5 SHEETS | 9 SHEETS |
| IRON OXIDE POWDER | EXPERIMENTAL EXAMPLE 1-11 | EXPERIMENTAL EXAMPLE 1-12 | EXPERIMENTAL EXAMPLE 1-13 | EXPERIMENTAL EXAMPLE 1-14 | EXPERIMENTAL EXAMPLE 1-15 |
| | 1 SHEET | 2 SHEETS | 2 SHEETS | 3 SHEETS | 5 SHEETS |

From the results shown in Table 1, it can be confirmed that when a magnetic layer including a magnetic material and an inorganic binder is formed on the surface of the board for building to obtain the board for building with the magnetic layer, the board for building with the magnetic layer has sufficient magnet attraction force. In addition, when cutting was attempted with a cutter, it was confirmed that the board for building with the magnetic layer in any of the experimental examples can be easily cut and processed into a desired shape.

### [Experimental example 2]

In the experimental example 2, the atomized iron powder was used as the magnetic material, which has the largest magnet attraction force when the content per unit area of the magnetic material in the magnetic layer in the experimental example 1 is the same. Then, the amount of inorganic binder mixed was varied, or an organic binder was used instead of an inorganic binder, and the board for building with the magnetic layer was manufactured similar to the case of the experimental example 1.

Specifically, a gypsum board having a thickness of 12.0 mm × a width of 300 mm × a length of 400 mm was prepared as the board for building, and a magnetic layer was formed on the entire surface of one of the main surfaces to obtain the board for building with the magnetic layer.

The magnetic layer was formed by applying a coating material including a magnetic material, which was formed by mixing, with respect to 100 parts by mass of the atomized iron powder, which is the magnetic material, an inorganic binder or an organic binder having the ratio shown in Table 2, as a binder, and water, to the main surface of the board for building 11 by a scraping method so that the thickness was 0.75 mm, and by drying the coating material including the magnetic material.

The same atomized iron powder as in Experiment 1 was used.

In experimental example 2-1 to experimental example 2-7, an alkali metal silicate-based binder, which is an inorganic binder, was used as the binder. Note that the alkali metal silicate-based binder that is the same as that of the experimental example 1 was used. In experimental examples 2-8, vinyl acetate resin, which is an organic binder, was used as the binder.

In each of the experimental examples, the magnetic layer 12 was formed, so that the content of iron powder, which is a magnetic material, per unit area was 2.0 kg/cm². Note that, when the magnetic layer 12 of each experimental example was formed, by adjusting the amount of water added to the coating material including the magnetic material, the amount of iron powder included in the magnetic layer 12 per unit area was adjusted to be a desired value.

In each of the experimental examples, the thickness of the magnetic layer was found to be within the range of 0.75 mm ± 0.25 mm.

Then, the magnet attraction test, adhesion test, appearance test, and heat generation test were performed on the manufactured board for building with the magnetic layer.

Since the magnet attraction test is already described in the experimental example 1, the description is omitted here, and other evaluation methods are described.

### (Adhesion test)

For performing the adhesion test, as shown in Fig. 6, a test sample 60 for the adhesion test was prepared by attaching attachments 621 and 622 to a test piece 61 of the board for building with the magnetic layer. Note that Fig. 6 shows a cross-sectional view of the test sample 60 for adhesion testing in a plane parallel to the lamination direction of the test piece 61 of the board for building with the magnetic layer and the attachments 621 and 622.

For preparing the test sample 60 for the adhesion test, a round saw was used to cut a test piece 61 of the board for building with the magnetic layer produced in each experimental example. Specifically, a cut was made perpendicular to the exposed surface of the magnetic layer, and the test piece 61 of the board for building with the magnetic layer was cut so as to be a rectangular shape with a size of 4 cm × 4 cm when viewed from above in the lamination direction of the magnetic layer and the board for building.

A pair of attachments 621 and 622 having a 4 cm × 4 cm size of the surface to which the sample is to be bonded were then bonded with epoxy resin to the portion of the board for building 611 and the portion of the magnetic layer 612 of the test piece 61 of the board for building with the magnetic layer, respectively. In this manner, the test sample 60 for the adhesion test was prepared.

Subsequently, the attachment 621 was secured and the other attachment 622 was pulled upwardly in FIG. 6 at a rate of 2 mm/min using an autograph (AG-X plus, Shimadzu Corporation) to observe a broken part in the test piece 61 of the board for building with the magnetic layer.

When the magnetic layer of the test piece 61 of the board for building with the magnetic layer was broken, specifically, between the magnetic layer 612 and the board for building 611, the adhesion between the magnetic layer and the board for building was weak, indicating that the adherence (adhesion) was not sufficient. In addition, when the test piece 61 of the board for building with the magnetic layer was broken at the board for building 611, the adhesion between the magnetic layer and the board for building was strong and the adherence was sufficiently large.

### (Appearance test)

The surface of the magnetic layer of the manufactured board for building with the magnetic layer was visually inspected to find out whether a crack was generated.

### (Heat generation test)

This was performed in accordance with the ISO 5660-1 Cone Calorimeter Act. Evaluation was performed according to 6. Determination in the Fire Resistance Performance Test and Evaluation Work Procedures, 4.10.1 Noncombustibility Test Methods, and 4.11.1 Quasi-noncombustibility Test Methods, Japan Research Institute.

In the evaluation of the heat generation test, the heat generation test (quasi-noncombustibility) indicates the total calorific value, the maximum rate of heat generation, and the presence or absence of crack penetration during the 10 minutes after the start of heating. The heat generation test (noncombustibility) indicates the total calorific value, the maximum rate of heat generation, and the presence or absence of crack penetration during the 20 minutes after the start of heating.

The experimental example 2-1 to the experimental example 2-7 are according to the embodiment, and the experimental example 2-8 is a reference example. The evaluation results are shown in Table 2.

**[Table 2]**

| | | | EXPERIMENTAL EXAMPLE 2-1 | EXPERIMENTAL EXAMPLE 2-2 | EXPERIMENTAL EXAMPLE 2-3 | EXPERIMENTAL EXAMPLE 2-4 | EXPERIMENTAL EXAMPLE 2-5 | EXPERIMENTAL EXAMPLE 2-6 | EXPERIMENTAL EXAMPLE 2-7 | EXPERIMENTAL EXAMPLE 2-8 |
|---|---|---|---|---|---|---|---|---|---|---|
| TYPE OF BINDER USED | | | INORGANIC BINDER | INORGANIC BINDER | INORGANIC BINDER | INORGANIC BINDER | INORGANIC BINDER | INORGANIC BINDER | INORGANIC BINDER | ORGANIC BINDER |
| BINDER CONTENT (PARTS BY MASS) WITH RESPECT TO 100 PARTS BY MASS OF MAGNETIC MATERIAL | | | 0.5 | 1.0 | 2.0 | 5.0 | 15.0 | 35.0 | 40.0 | 5.0 |
| EVALUATION RESULTS | MAGNET ATTRACTION TEST (SHEETS) | | 5 | 5 | 5 | 5 | 5 | 5 | 5 | 5 |
| | ADHESION TEST (BROKEN AREA) | | MAGNETIC LAYER | GYPSUM CORE | GYPSUM CORE | GYPSUM CORE | GYPSUM CORE | GYPSUM CORE | GYPSUM CORE | GYPSUM CORE |
| | APPEARANCE TEST (SURFACE CRACK) | | NONE | NONE | NONE | NONE | NONE | NONE | EXISTS | NONE |
| | HEAT GENERATION TEST (QUASI-NONCOMBUSTIBLE) | GROSS CALORIC VALUE (MJ/m²) | 8.4 | 7.8 | 7.0 | 4.4 | 1.0 | 0.6 | 0.6 | 12.0 |
| | | MAXIMUM HEATING RATE (kw/m²) | 26 | 24 | 22 | 24 | 20 | 27 | 25 | 110 |
| | | CRACK PENETRATION | NONE | NONE | NONE | NONE | NONE | NONE | NONE | NONE |
| | HEAT GENERATION TEST (NONCOMBUSTIBLE) | GROSS CALORIC VALUE (MJ/m²) | 8.9 | 8.5 | 7.9 | 4.5 | 1.4 | 1.2 | 1.2 | 16.5 |
| | | MAXIMUM HEATING RATE (kw/m²) | 22 | 24 | 26 | 24 | 25 | 21 | 30 | 108 |
| | | CRACK PENETRATION | NONE | NONE | NONE | NONE | NONE | NONE | NONE | NONE |

From the results shown in Table 2, it can be confirmed that the board for building with the magnetic layer according to any of the experimental example 2-1 to the experimental example 2-7 is provided with sufficient magnet attraction force. In addition, when cutting was attempted with a cutter, it was confirmed that the board for building with the magnetic layer according to any of the experimental examples can be easily cut and processed into a desired shape.

Furthermore, in the experimental example 2-1 to the experimental example 2-7 using an inorganic binder, the total calorific value and the maximum heating rate were suppressed compared to the experimental example 2-8 using an organic binder, confirming that the noncombustibility was enhanced.

Note that, if the total heat generation during the 10 minutes after the start of heating is less than or equal to 8 MJ/m², the maximum heating rate does not exceed 200 kw/m² continuously for more than 10 seconds, and there are no cracks or holes penetrating into the rear surface, which is harmful for fire prevention, the material is determined to be a quasi-noncombustible material. Furthermore, if the same requirements as those of the quasi-noncombustibility are met for 20 minutes after the start of heating, the material is determined to be a noncombustible material. Accordingly, it was confirmed that the board for building with the magnetic layer in each of the experimental example 2-3 to the experimental example 2-7 was the noncombustible material. In addition, it was confirmed that the board for building with the magnetic layer in each of the experimental example 2-2 to the experimental example 2-7 was the quasi-noncombustible material.

In the adhesion test, in the experimental example 2-1, in which the amount of inorganic binder mixed was less than 1 part by mass compared to 100 parts by mass of magnetic material, the broken part in the adhesion test was the magnetic layer. Note that, since the magnetic layer is thin, a break at the magnetic layer means a break between the magnetic layer and the board for building, that is, at the interface. In contrast, in the experimental example 2-2 to the experimental example 2-7, in which the amount of inorganic binder mixed was greater than or equal to one part by mass with respect to 100 parts by mass of the magnetic material, it was confirmed that there was no break at the interface between the magnetic layer and the board for building, and that there was a break inside the gypsum core, i.e., the board for building.

In the experimental example 2-1, the adhesion between the magnetic layer and the board for building was weaker compared to the experimental example 2-2 to the experimental example 2-7. In other words, since the adhesion was weak, the break occurred at the interface. In other experimental examples 2-2 to 2-7, since the adhesive strength between the magnetic layer and the board for building was sufficiently large, the break occurred at the gypsum core.

However, it was confirmed that, as in the experimental example 2-7, if the amount of the inorganic binder was too large, a crack could be generated in the magnetic layer.

### [Experimental example 3]

In the experimental example 3, the atomized iron powder was used as the magnetic material, which has the largest magnetic attraction force when the content per unit area of the magnetic material in the magnetic layer was the same in the experimental example 1. Then, the board for building with the magnetic layer was manufactured using, as the coating material including the magnetic material, a resultant obtained by adding a predetermined amount of an inorganic additive to the above-described magnetic material and the inorganic binder, and the evaluation was performed.

Specifically, a gypsum board having a thickness of 12.0 mm × a width of 300 mm × a length of 400 mm was prepared as the board for building, and the board for building with the magnetic layer was obtained by forming a magnetic layer on the entire surface of one of the main surfaces.

The magnetic layer was formed by applying a coating material including a magnetic material, which was formed by mixing, with respect to 100 parts by mass of the atomized iron powder, which is the magnetic material, 5 parts by mass of an alkali metal silicate-based binder, which is an inorganic binder, the inorganic additive in the ratio shown in Table 3, and 20 parts by mass of water, to the main surface of the board for building 11 by a scraping method so that the thickness was 0.75 mm, and by drying the coating material including the magnetic material.

Note that the atomized iron powder and the alkali metal silicate-based binder were used which were the same as those of the experimental example 1.

Talc with an average particle diameter of 16 um was used as the inorganic additive.

In each of the experimental examples, the magnetic layer 12 was formed so that the content of the iron powder, which is the magnetic material, per unit area was 2.0 kg/m².

In each of the experimental example, it was confirmed that the thickness of the formed magnetic layer was within the range of 0.75 mm ± 0.25 mm.

Then, the magnet attraction test, the adhesion test, the appearance test, and the heat generation test were performed on the manufactured board for building with the magnetic layer.

Since the magnet attraction test, the adhesion test, and the heat generation test are already described in the experimental example 1 or the experimental example 2, the description is omitted here.

In the appearance test, the surface of the magnetic layer was evaluated to find out whether a pinhole was generated, which is a trace of air bubbles. If a pinhole was visually confirmed, it was evaluated to be present. If no pihole was visually confirmed, it was evaluated to the absent.

Each of the experimental example 3-1 to the experimental example 3-6 is according to the embodiment.

**[Table 3]**

| | | | EXPERIMENTAL EXAMPLE 3-1 | EXPERIMENTAL EXAMPLE 3-2 | EXPERIMENTAL EXAMPLE 3-3 | EXPERIMENTAL EXAMPLE 3-4 | EXPERIMENTAL EXAMPLE 3-5 | EXPERIMENTAL EXAMPLE 3-6 |
|---|---|---|---|---|---|---|---|---|
| INORGANIC ADDITIVE CONTENT (PARTS BY MASS) WITH RESPECT TO 100 PARTS BY MASS OF MAGNETIC MATERIAL | | | 0.1 | 0.5 | 1 | 10 | 30 | 40 |
| EVALUATION RESULTS | MAGNET ATTRACTION TEST (SHEETS) | | 5 | 5 | 5 | 5 | 5 | 5 |
| | ADHESION TEST | | GYPSUM CORE | GYPSUM CORE | GYPSUM CORE | GYPSUM CORE | GYPSUM CORE | GYPSUM CORE |
| | APPEARANCE TEST | | EXISTS | NONE | NONE | NONE | NONE | EXISTS |
| | HEAT GENERATION TEST (NONCOMBUSTIBLE) | GROSS CALORIC VALUE (MJ/m²) | 4.5 | 4.7 | 4.2 | 4.2 | 4.0 | 4.6 |
| | | MAXIMUM HEATING RATE (kw/m²) | 22 | 24 | 23 | 30 | 27 | 25 |
| | | CRACK PENETRATION | NONE | NONE | NONE | NONE | NONE | NONE |

Based on the results shown in Table 3, it was confirmed that the board for building with the magnetic layer according to each of the experimental example 3-1 to the experimental example 3-6 had sufficient magnet attraction force. In addition, when cutting was attempted with a cutter, it was confirmed that the board for building with the magnetic layer in each of the experimental examples can be easily cut and processed into a desired shape.

In the experimental examples 3-1 to the experimental example 3-6, when the adhesion test was performed, it was confirmed that a break occurred in the board for building, i.e., in the gypsum core, and that the adhesion between the magnetic layer and the board for building was sufficiently strong.

In the experimental example 3-1 and the experimental example 3-6, it was confirmed that a pinhole was generated on the surface of the magnetic layer. It can be considered that the amount of inorganic additives added was insufficient or excessively large, and the fluidity of the coating material including the magnetic material was not sufficient.

It was confirmed that the board for building with the magnetic layer according to each of the experimental example 3-1 to the experimental example 3-6 was the noncombustible material.

### [Experimental example 4]

In the experimental example 4, the type of the board for building was changed, and the board for building with the magnetic layer shown in Fig. 1 was manufactured and evaluated.

First, manufacturing conditions of the board for building with the magnetic layer are described.

As the board for building 11, the various types of boards for building shown in Table 4 were prepared. Each board for building had a thickness of 12.0 mm × a width of 300 mm × a length of 400 mm. The board for building with the magnetic layer was obtained by forming a magnetic layer on the entire surface of one of the main surfaces.

The magnetic layer was formed by applying a coating material including a magnetic material, which was formed by mixing, with respect to 100 parts by mass of the atomized iron powder, which is the magnetic material, 5 parts by mass of an alkali metal silicate-based binder, which is an inorganic binder and 20 parts by mass of water, to the main surface of the board for building 11 by a scraping method so that the thickness was 0.75 mm, and by drying the coating material including the magnetic material.

Note that the atomized iron powder and the alkali metal silicate-based binder were used which were the same as those of the experimental example 1.

In each of the experimental examples, the magnetic layer 12 was formed so that the content of the iron powder, which is the magnetic material, per unit area was 2.0 kg/m².

It was confirmed that the thickness of the formed magnetic layer was within the range of 0.75 mm ± 0.25 mm.

Then, the magnet attraction test, the adhesion test, and the heat generation test were performed on the manufactured board for building with the magnetic layer.

Since the magnet attraction test, the adhesion test, and the heat generation test are already described in the experimental example 1 or the experimental example 2, the description is omitted here.

Each of the experimental example 4-1 to the experimental example 4-5 is according to the embodiment.

**[Table 4]**

| | | | EXPERIMENTAL EXAMPLE 4-1 | EXPERIMENTAL EXAMPLE 4-2 | EXPERIMENTAL EXAMPLE 4-3 | EXPERIMENTAL EXAMPLE 4-4 | EXPERIMENTAL EXAMPLE 4-5 |
|---|---|---|---|---|---|---|---|
| TYPE OF PLATE MATERIAL | | | FIBER REINFORCED CEMENT BOARD | GLASS FIBER MIXED CEMENT BOARD | FIBER MIXED CALCIUM SILICATE BOARD | GYPSUM BOARD | SLAG GYPSUM BOARD |
| EVALUATION RESULTS | MAGNET ATTRACTION TEST (SHEETS) | | 5 | 5 | 5 | 5 | 5 |
| | ADHESION TEST | | BASE MATERIAL | BASE MATERIAL | BASE MATERIAL | BASE MATERIAL | BASE MATERIAL |
| | HEAT GENERATION TEST (NONCOMBUSTIBLE) | GROSS CALORIC VALUE (MJ/m²) | 3.0 | 3.0 | 1.5 | 0.5 | 1.5 |
| | | MAXIMUM HEATING RATE (kw/m²) | 13 | 15 | 13 | 10 | 10 |
| | | CRACK PENETRATION | NONE | NONE | NONE | NONE | NONE |

Based on the results shown in Table 4, it was confirmed that the board for building with the magnetic layer according to each of the experimental example 4-1 to the experimental example 4-5 had sufficient magnet attraction force. In addition, when cutting was attempted with a cutter, it was confirmed that the board for building with the magnetic layer in each of the experimental examples can be easily cut and processed into a desired shape.

In the experimental examples 4-1 to the experimental example 4-5, when the adhesion test was performed, it was confirmed that a break occurred in the board for building, i.e., in a base material, and that the adhesion between the magnetic layer and the board for building was sufficiently strong.

It was confirmed that the board for building with the magnetic layer according to each of the experimental example 4-1 to the experimental example 4-5 was a noncombustible material.

### [Experimental example 5]

In the experimental example 5, the atomized iron powder was used as the magnetic material, which has the largest magnetic attraction force when the content per unit area of the magnetic material in the magnetic layer was the same in the experimental example 1. Then, the board for building with the magnetic layer was manufactured using, as the coating material including the magnetic material, a resultant obtained by adding a predetermined amount of an inorganic additive and thickener to the above-described magnetic material and the inorganic binder, and the evaluation was performed.

Specifically, a gypsum board having a thickness of 12.0 mm × a width of 300 mm × a length of 400 mm was prepared as the board for building, and the board for building with the magnetic layer was obtained by forming a magnetic layer on the entire surface of one of the main surfaces.

The magnetic layer was formed by applying a coating material including a magnetic material, which was formed by mixing, with respect to 100 parts by mass of the atomized iron powder, which is the magnetic material, 5 parts by mass of an alkali metal silicate-based binder, which is an inorganic binder, 5 parts by mass of an inorganic additive, a modified polyacrylic sulfonate, which is a thickening agent, in the ratio shown in Table 5, and 20 parts by mass of water, to the main surface of the board for building 11 by a scraping method so that the thickness was 0.75 mm, and by drying the coating material including the magnetic material.

Note that the atomized iron powder and the alkali metal silicate-based binder were used which were the same as those of the experimental example 1.

Talc with an average particle diameter of 16 µm was used as the inorganic additive.

In each of the experimental examples, the magnetic layer 12 was formed so that the content of the iron powder, which is the magnetic material, per unit area was 2.0 kg/m².

In each of the experimental example, it was confirmed that the thickness of the formed magnetic layer was within the range of 0.75 mm ± 0.25 mm.

Then, the magnet attraction test, the adhesion test, and the heat generation test were performed on the manufactured board for building with the magnetic layer.

Since the magnet attraction test, the adhesion test, and the heat generation test are already described in the experimental example 1 or the experimental example 2, the description is omitted here.

Each of the experimental example 5-1 to the experimental example 5-4 is according to the embodiment.

**[Table 5]**

| | | | EXPERIMENTAL EXAMPLE 5-1 | EXPERIMENTAL EXAMPLE 5-2 | EXPERIMENTAL EXAMPLE 5-3 | EXPERIMENTAL EXAMPLE 5-4 |
|---|---|---|---|---|---|---|
| THICKENER CONTENT (PARTS BY MASS) WITH RESPECT TO 100 PARTS BY MASS OF MAGNETIC MATERIAL | | | 0 | 1 | 2 | 5 |
| EVALUA TION RESULTS | MAGNET ATTRACTION TEST (SHEETS) | | 5 | 5 | 5 | 5 |
| | ADHESION TEST | | GYPSUM CORE | GYPSUM CORE | GYPSUM CORE | GYPSUM CORE |
| | HEAT GENERATION TEST (NONCOMBUSTIBLE) | GROSS CALORIC VALUE (MJ/m²) | 4.2 | 4.3 | 4.5 | 4.6 |
| | | MAXIMUM HEATING RATE (kw/m²) | 23 | 25 | 26 | 24 |
| | | CRACK PENETRATION | NONE | NONE | NONE | NONE |

Based on the results shown in Table 5, it was confirmed that the board for building with the magnetic layer according to each of the experimental example 5-1 to the experimental example 5-4 had sufficient magnet attraction force. In addition, when cutting was attempted with a cutter, it was confirmed that the board for building with the magnetic layer in each of the experimental examples can be easily cut and processed into a desired shape.

In the experimental examples 5-1 to the experimental example 5-4, when the adhesion test was performed, it was confirmed that a break occurred in the board for building, i.e., in the gypsum core, and that the adhesion between the magnetic layer and the board for building was sufficiently strong.

It was confirmed that the board for building with the magnetic layer according to each of the experimental example 5-1 to the experimental example 5-4 was noncombustible material. In addition, it was confirmed that, if the mixed amount of the thickener, which was an organic compound, was approximately less than or equal to 5 parts by mass with respect to 100 parts by mass of the magnetic material, there was no significant change in the total calorific value, and the noncombustibility was not significantly affected.

### [Experimental example 6]

In the experimental example 6, the atomized iron powder was used as the magnetic material, which has the largest magnetic attraction force when the content per unit area of the magnetic material in the magnetic layer was the same in the experimental example 1. Then, the board for building with the magnetic layer was manufactured using, as the raw material of the coating material including the magnetic material, in addition to the above-described magnetic material, a predetermined amount of an inorganic additive, and an inorganic binder or an organic binder, as the binder, and the evaluation was performed.

Specifically, a gypsum board having a thickness of 12.0 mm × a width of 300 mm × a length of 400 mm was prepared as the board for building, and the board for building with the magnetic layer was obtained by forming a magnetic layer on the entire surface of one of the main surfaces.

The magnetic layer was formed by applying a coating material including a magnetic material, which was formed by mixing, with respect to 100 parts by mass of the atomized iron powder, which is the magnetic material, 5 parts by mass of talc, 5 parts by mass of the inorganic binder (the experimental example 6-1) or the organic binder (the experimental example 6-2), as a binder, and 20 parts by mass of water, to the main surface of the board for building 11 by a scraping method so that the thickness was 0.75 mm, and by drying the coating material including the magnetic material.

The atomized iron powder was used which was the same as that of the experimental example 1.

Talc with an average particle diameter of 16 um was used as the inorganic additive.

In the experimental example 6-1, an alkali metal silicate-based binder, which is an inorganic binder, was used as the binder. As the alkali metal silicate-based binder, the binder was used that was the same as that of the experimental example 1. In the experimental example 6-2, vinyl acetate resin, which is an organic binder, was used as the binder.

In each of the experimental examples, the magnetic layer 12 was formed so that the content of the iron powder, which is the magnetic material, per unit area was 2.0 kg/m².

In each of the experimental example, it was confirmed that the thickness of the formed magnetic layer was within the range of 0.75 mm ± 0.25 mm.

Then, generation of rust was evaluated for the manufactured board for building with the magnetic layer.

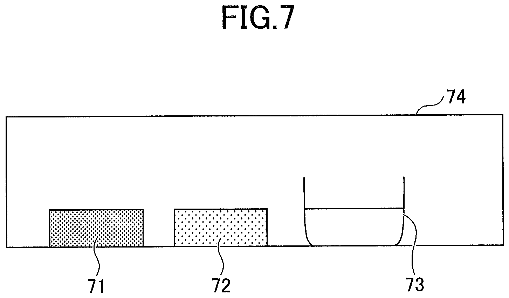

In order to evaluate the generation of rust, as shown in Fig. 7, a board for building with a magnetic layer 71 in the experimental example 6-1, a board for building with a magnetic layer 72 in the experimental example 6-2, and a petri dish 73 with 100 mL of water were placed in a sealed container 74, and the sealed container was placed in a constant temperature bath set at 40°C to visually check whether rust was generated in the magnetic layer.

The results are shown in Table 6. Note that the experimental example 6-1 is according to the embodiment, and the experimental example 6-2 is a referance example.

**[Table 6]**

| | | EXPERIMENTAL EXAMPLE 6-1 | EXPERIMENTAL EXAMPLE 6-2 |
|---|---|---|---|
| BINDER | | INORGANIC BINDER | ORGANIC BINDER |
| EVALUATION RESULTS | 0 DAYS FROM START OF THE TEST | WITHOUT RUST | WITHOUT RUST |
| | 7 DAYS FROM START OF THE TEST | WITHOUT RUST | WITH RUST |
| | 14 DAYS FROM START OF THE TEST | WITHOUT RUST | WITH RUST |

According to the results shown in Table 6, it was confirmed that rust did not occur in the board for building with the magnetic layer in the experimental example 6-1 using the inorganic binder even at 14 days after the start of the test. However, rust was observed in the board for building with the magnetic layer in the experimental example 6-2 using the organic binder 7 days after the start of the test.

From the above-described results, it was confirmed that, by using an inorganic binder as a binder, a magnetic material of a magnetic layer can be prevented from oxidizing, and generation of rust, etc., can be suppressed without adding the rust preventing agent.

Though the results of the magnet attraction test are not shown, it was confirmed that the board for building with the magnetic layer according to each of the experimental example 6-1 and the experimental example 6-2 had sufficient magnet attraction force. In addition, when cutting was attempted with a cutter, it was confirmed that the board for building with the magnetic layer in each of the experimental examples can be easily cut and processed into a desired shape.

The board for building with the magnetic layer is described above by the embodiments, etc. However, the present invention is not limited to the above-described embodiments, etc. Various modifications and variations can be made within the scope of the claims.

### [Description of Symbols]

10, 21, 71 Board for building with magnetic layer
11, 611 Board for building
12, 612 Magnetic layer

## Claims

1. A board for building with a magnetic layer comprising:
a board for building; and
a magnetic layer that covers at least a part of a surface of the board for building,
wherein the magnetic layer includes a magnetic material mixed to an inorganic binder,
**characterized in that**
the magnetic layer includes an inorganic additive,
wherein the inorganic additive is talc.

2. The board for building with the magnetic layer according to claim 1, wherein the Hunter whiteness degree (WB) measured by a color difference meter on the surface of the magnetic layer exceeds 25.

3. The board for building with the magnetic layer according to claim 1 or 2, wherein the magnetic layer includes, with respect to 100 parts by mass of the magnetic material, the inorganic binder at a ratio that is greater than or equal to 1 part by mass and less than or equal to 35 parts by mass.

4. The board for building with the magnetic layer according to any one of claims 1 through 3, wherein, the magnetic layer further includes, with respect to 100 parts by mass of the magnetic material, an inorganic additive at a ratio that is greater than or equal to 0.5 parts by mass and less than or equal to 30 parts by mass.

5. The board for building with the magnetic layer according to any one of claims 1 through 4, wherein, in the magnetic layer, content of the magnetic material per unit area is greater than or equal to 0.3 kg/m².

6. The board for building with the magnetic layer according to any one of claims 1 through 5, wherein the board for building is a fiber-reinforced cement board, a glass mat gypsum board, a glass fiber nonwoven gypsum-including board, a glass fiber-mixed cement board, a fiber-mixed calcium silicate board, a gypsum board, a gypsum plate, a slag gypsum board, or a resin board.

7. The board for building with the magnetic layer according to any one of claims 1 through 6, wherein, in the magnetic layer, a content ratio of an organic compound is less than or equal to 5 parts by mass with respect to 100 parts by mass of the magnetic material.

8. The board for building with the magnetic layer according to any one of claims 1 through 7, wherein a face of the magnetic layer opposite to a face of the magnetic layer on the board for building is exposed.

9. The board for building with the magnetic layer according to any one of claims 1 through 8, wherein a thickness of the board for building with the magnetic layer is any one of: greater than or equal to 9.5 mm and less than or equal to 10.0 mm; greater than or equal to 12.5 mm and less than or equal to 13.0 mm; greater than or equal to 15.0 mm and less than or equal to 15.5 mm; greater than or equal to 16.0 mm and less than or equal to 16.5 mm; greater than or equal to 18.0 mm and less than or equal to 18.5 mm; greater than or equal to 21.0 mm and less than or equal to 21.5 mm; and greater than or equal to 25.0 mm and less than or equal to 25.5 mm.

10. The board for building with the magnetic layer according to any one of claims 1 through 9, wherein the board for building with the magnetic layer meets quasi-noncombustibility performance.

11. The board for building with the magnetic layer according to any one of claims 1 through 9, wherein the board for building with the magnetic layer meets noncombustibility performance.

## Patentansprüche

1. Bauplatte mit einer magnetischen Schicht, umfassend:
eine Bauplatte; und
eine magnetische Schicht, die mindestens einen Teil einer Oberfläche der Bauplatte bedeckt,
wobei die magnetische Schicht ein magnetisches Material gemischt mit einem anorganischen Bindemittel enthält,
**dadurch gekennzeichnet, dass** die magnetische Schicht einen anorganischen Zusatzstoff enthält, wobei der anorganische Zusatzstoff Talkum ist.

2. Bauplatte mit der magnetischen Schicht nach Anspruch 1, wobei der mit einem Farbdifferenzmessgerät gemessene Weißgrad nach Hunter (WB) auf der Oberfläche der magnetischen Schicht 25 übersteigt.

3. Bauplatte mit der magnetischen Schicht nach Anspruch 1 oder 2, wobei die magnetische Schicht, bezogen auf 100 Masseteile des magnetischen Materials, das anorganische Bindemittel in einem Verhältnis von mehr als oder gleich 1 Masseteil und weniger als oder gleich 35 Masseteilen enthält.

4. Bauplatte mit der magnetischen Schicht nach einem der Ansprüche 1 bis 3, wobei die magnetische Schicht außerdem, bezogen auf 100 Masseteile des magnetischen Materials, ein anorganisches Additiv in einem Verhältnis von mehr als oder gleich 0,5 Masseteilen und weniger als oder gleich 30 Masseteilen enthält.

5. Bauplatte mit der magnetischen Schicht nach einem der Ansprüche 1 bis 4, wobei in der magnetischen Schicht der Gehalt an magnetischem Material pro Flächeneinheit größer oder gleich 0,3 kg/m² ist.

6. Bauplatte mit der magnetischen Schicht nach einem der Ansprüche 1 bis 5, wobei die Bauplatte eine faserverstärkte Zementplatte, eine Glasmatten-Gipsplatte, eine Glasfaservlies-Gipsplatte, eine glasfasergemischte Zementplatte, eine fasergemischte Calciumsilikatplatte, eine Gipsplatte, eine Gipstafel, eine Schlackengipsplatte oder eine Harzplatte ist.

7. Bauplatte mit der magnetischen Schicht nach einem der Ansprüche 1 bis 6, wobei in der magnetischen Schicht das Verhältnis des Gehalts einer organischen Verbindung weniger als oder gleich 5 Masseteile bezogen auf 100 Masseteile des magnetischen Materials beträgt.

8. Bauplatte mit der magnetischen Schicht nach einem der Ansprüche 1 bis 7, wobei eine Fläche der magnetischen Schicht, die einer Fläche der magnetischen Schicht auf der Bauplatte gegenüberliegt, freigelegt ist.

9. Bauplatte mit der magnetischen Schicht nach einem der Ansprüche 1 bis 8, wobei die Dicke der Bauplatte mit der magnetischen Schicht eine der folgenden ist: größer als oder gleich 9,5 mm und kleiner als oder gleich 10,0 mm; größer als oder gleich 12,5 mm und kleiner als oder gleich 13,0 mm; größer als oder gleich 15,0 mm und kleiner als oder gleich 15,5 mm; größer als oder gleich 16,0 mm und kleiner als oder gleich 16,5 mm; größer als oder gleich 18,0 mm und kleiner als oder gleich 18,5 mm; größer als oder gleich 21,0 mm und kleiner als oder gleich 21,5 mm; und größer als oder gleich 25,0 mm und kleiner als oder gleich 25,5 mm.

10. Bauplatte mit der magnetischen Schicht nach einem der Ansprüche 1 bis 9, wobei die Bauplatte mit der magnetischen Schicht quasi nicht brennbare Eigenschaften aufweist.

11. Bauplatte mit der magnetischen Schicht nach einem der Ansprüche 1 bis 9, wobei die Bauplatte mit der magnetischen Schicht nicht brennbar ist.

## Revendications

1. Panneau de construction avec une couche magnétique comportant :
un panneau de construction ; et
une couche magnétique qui recouvre au moins une partie d'une surface du panneau de construction,
dans lequel la couche magnétique inclut un matériau magnétique mélangé à un liant inorganique,
**caractérisé en ce que** la couche magnétique inclut un additif inorganique,
dans lequel l'additif inorganique est du talc.

2. Panneau de construction avec la couche magnétique selon la revendication 1, dans lequel le degré de blancheur Hunter (WB) mesuré par un colorimètre sur la surface de la couche magnétique dépasse 25.

3. Panneau de construction avec la couche magnétique selon la revendication 1 ou 2, dans lequel la couche magnétique inclut, par rapport à 100 parties en masse du matériau magnétique, le liant inorganique en une proportion qui est supérieure ou égale à 1 partie en masse et inférieure ou égale à 35 parties en masse.

4. Panneau de construction avec la couche magnétique selon l'une quelconque des revendications 1 à 3, dans lequel la couche magnétique inclut en outre, par rapport à 100 parties en masse du matériau magnétique, un additif inorganique en une proportion qui est supérieure ou égale à 0,5 partie en masse et inférieure ou égale à 30 parties en masse.

5. Panneau de construction avec la couche magnétique selon l'une quelconque des revendications 1 à 4, dans lequel, dans la couche magnétique, une teneur du matériau magnétique par surface unitaire est supérieure ou égale à 0.3 kg/m².

6. Panneau de construction avec la couche magnétique selon l'une quelconque des revendications 1 à 5, dans lequel le panneau de construction est un panneau de ciment renforcé par des fibres, un panneau de plâtre à mat de verre, un panneau incluant du plâtre et un non-tissé de fibres de verre, un panneau de ciment mélangé avec des fibres de verre, un panneau de silicate de calcium mélangé avec des fibres, un panneau de plâtre, une plaque de plâtre, un panneau de plâtre et de laitier ou un panneau de résine.

7. Panneau de construction avec la couche magnétique selon l'une quelconque des revendications 1 à 6, dans lequel, dans la couche magnétique, une proportion en teneur d'un composé organique est inférieur ou égal à 5 parties en masse par rapport à 100 parties en masse du matériau magnétique.

8. Panneau de construction avec la couche magnétique selon l'une quelconque des revendications 1 à 7, dans lequel une face de la couche magnétique opposée à une face de la couche magnétique sur le panneau de construction, est exposée.

9. Panneau de construction avec la couche magnétique selon l'une quelconque des revendications 1 à 8, dans lequel une épaisseur du panneau de construction avec la couche magnétique est une valeur quelconque parmi : supérieure ou égale à 9,5 mm et inférieure ou égale à 10,0 mm ; supérieure ou égale à 12,5 mm et inférieure ou égale à 13,0 mm ; supérieure ou égale à 15,0 mm et inférieure ou égale à 15,5 mm ; supérieure ou égale à 16,0 mm et inférieure ou égale à 16,5 mm ; supérieure ou égale à 18,0 mm et inférieure ou égale à 18,5 mm ; supérieure ou égale à 21,0 mm et inférieure ou égale à 21,5 mm ; et supérieure ou égale à 25,0 mm et inférieure ou égale à 25,5 mm

10. Panneau de construction avec la couche magnétique selon l'une quelconque des revendications 1 à 9, dans lequel le panneau de construction avec la couche magnétique satisfait à une performance de quasi incombustibilité.

11. Panneau de construction avec la couche magnétique selon l'une quelconque des revendications 1 à 9, dans lequel le panneau de construction avec la couche magnétique satisfait à la performance d'incombustibilité.
